# EUROPEAN PATENT SPECIFICATION

(11) **EP 2 116 743 B1**
(45) Date of publication and mention of the grant of the patent: **27.03.2013**
(21) Application number: 09158559.6
(22) Date of filing: 23.04.2009
(51) Int. Cl.: F16H 55/56, F16H 9/18

(54) **Variable belt drive**
Variabler Riemenantrieb
Commande de courroie variable

(30) Priority: 08.05.2008 US 117414
(43) Date of publication of application: 11.11.2009
(73) Proprietor: Deere & Company, Moline, IL 61265-8098 (US)
(72) Inventor: Appleton, Andy Blaine, Cedar Falls, IA 50613 (US); Oliver, Matthew Robert, Waterloo, IA 50702 (US); Tebbe, Scott Alan, Oconomowoc, WI 53066-4317 (US); Rush, Randy Charles, Waterloo, IA 50701 (US)
(74) Representative: John Deere GmbH & Co. KG

(56) References cited:
- EP-A1- 1 826 113
- DE-A1- 2 116 547
- US-A- 2 887 893
- US-A- 3 893 343

## Description

The present invention relates to a variable belt drive, comprising a non-rotating piston housing, the housing forming at least one piston bore therein; a rotatable input shaft for coupling to a power source and supported by bearings in the piston housing; a first sheave mounted for rotation with the shaft and fixed axially with respect to the shaft.

It is desirable to vary the cooling fan speed relative to the engine speed so that the vehicle has adequate cooling for all conditions and energy use is minimized. This has been accomplished for four wheel drive loaders with the use of a hydraulic pump, valve and motor that allow variations in fan speed. Another solution used on the production John Deere 8030 Series agricultural tractors involves varying fan speed with a sheave which is moved by a single moveable piston actuated by engine oil. Another production John Deere 9030 Series agricultural tractor also uses moveable sheaves with a single moveable piston. The 9030 moveable piston is actuated by transaxle oil. Passenger cars solve this problem through the use of electrically driven fans and a larger alternator.

US-A-2,887,893 shows a variable speed transmission comprising a variable pitch pulley. The transmission has a pair of fluid-operable actuating units uniformly distributed around a shat to exert pressure upon an annular member.

The generic DE 2 116 547 A shows a pulley-type variable speed transmission for utilization on machine tools, such as on drill presses, latches or milling machines.

There is a need for a variable speed fan drive with movable fan sheave design which does not require rotating seals, which utilizes multiple smaller pistons and O-ring seals, and wherein the pistons are protected from the environment Accordingly, a movable fan sheave design is needed which has reduced leakage of hydraulic fluid. A movable fan sheave design is needed which does not require rotating seals to contain pressurized fluid. A movable fan sheave design is needed, which utilizes multiple smaller pistons. A movable fan sheave design is needed which utilizes O-ring seals which have a very low leak rate. A movable fan sheave design is needed wherein the pistons are protected from the environment. A movable fan sheave design is needed wherein the bearings require no service and are not dependent on engine oil for lubrication.

It is therefore the object of the present invention to comply with one, some or all of these needs.

This object is met according to the invention by the teaching of claim 1, while features developing the solution in an advantageous manner are set forth in the further claims.

The present invention provides variable belt drive which may include a non-rotating piston housing which forms one or a plurality of piston bores therein. The housing may receive a rotatable input shaft which is supported by bearings and coupled to a power source. A first sheave may be mounted for rotation with the shaft and fixed axially with respect to the shaft. A second sheave may be mounted for rotation with the shaft and slidable axially with respect to the shaft. A piston/pistons is/are axially movable in the piston bore(s) in response to fluid pressure. A non-rotating carrier engages the ends of the piston(s). A thrust bearing has an outer race fixed axially with respect to the carrier and rotatable with the carrier, and an inner race fixed axially with respect to the second sheave and rotatable with the second sheave.

The carrier may include an annular surface which engages an outer surface of the outer race of the thrust bearing. An annular inwardly opening groove may be formed in the annular surface. An O-ring may be received in the groove. The O-ring may engage the outer surface of the outer race to resist rotation of the outer race.

A flexible boot may have one end fixed to the piston housing and a second end fixed to the carrier. The boot may prevent exposure of the piston to the environment.

Embodiments of the invention described below are shown in the drawings, in which:
Fig. 1 is a perspective view variable belt or fan drive embodying the invention;
Fig. 2 is a sectional view of a variable belt or fan drive embodying the invention;
Fig. 3 is a perspective view of the piston housing of Figs. 1 and 2; and
Fig. 4 is another perspective view of the piston housing of Figs. 1 and 2.

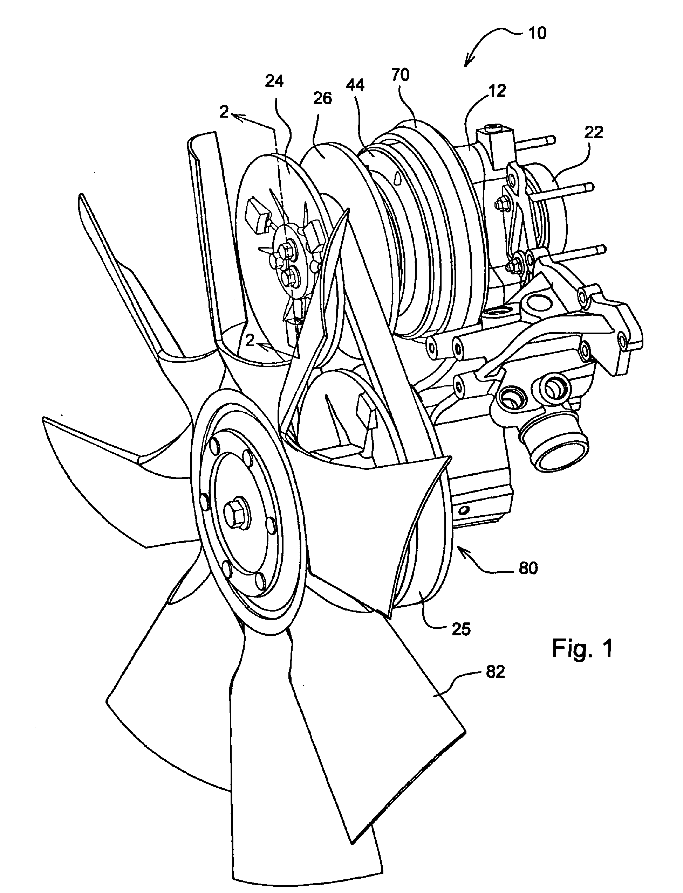

Referring to Fig. 1, a variable belt drive 10 includes non-rotating piston housing 12 which is bolted to an engine block (not shown). The belt drive 10 is coupled by a belt 25 to fan pulley 80 which drives a vehicle cooling fan 82.

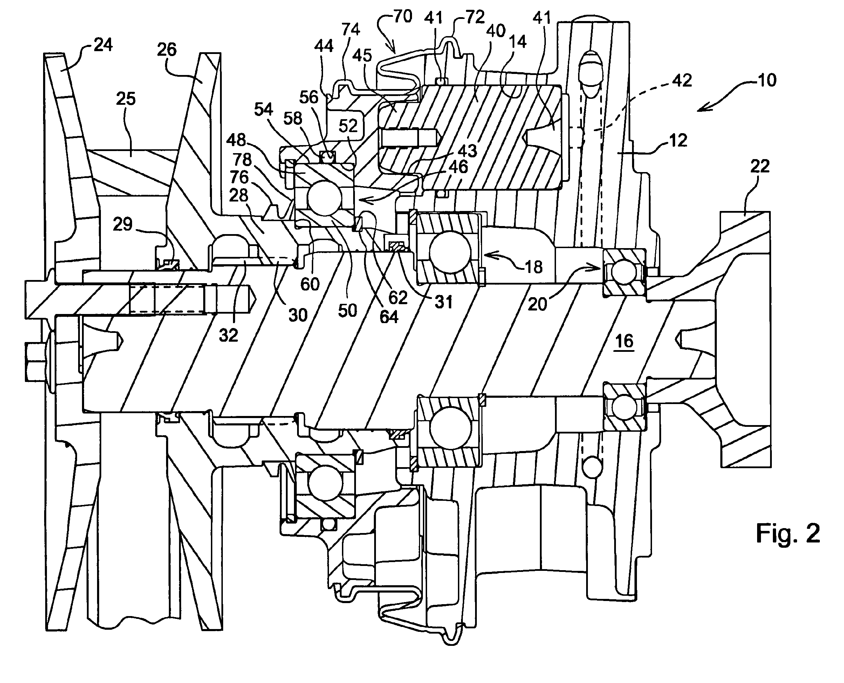

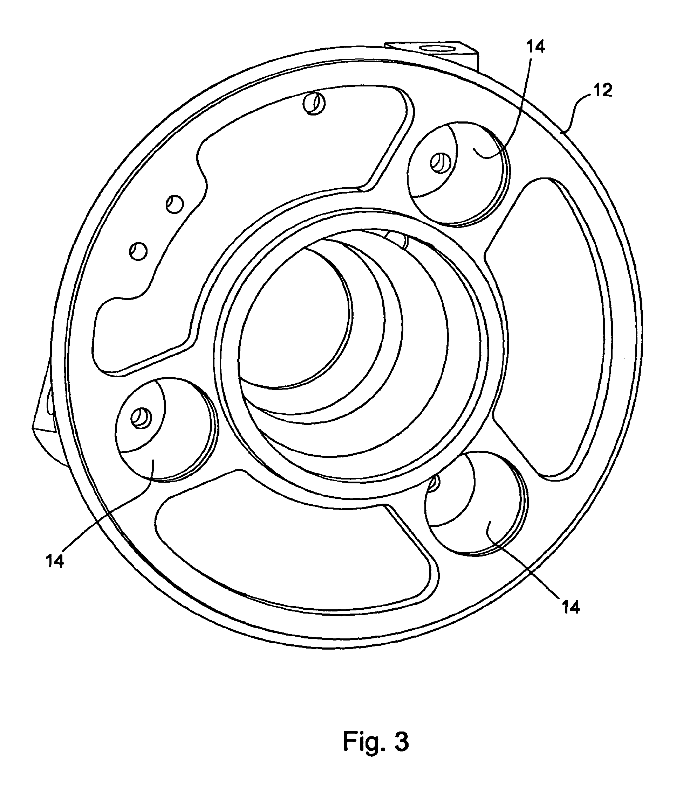

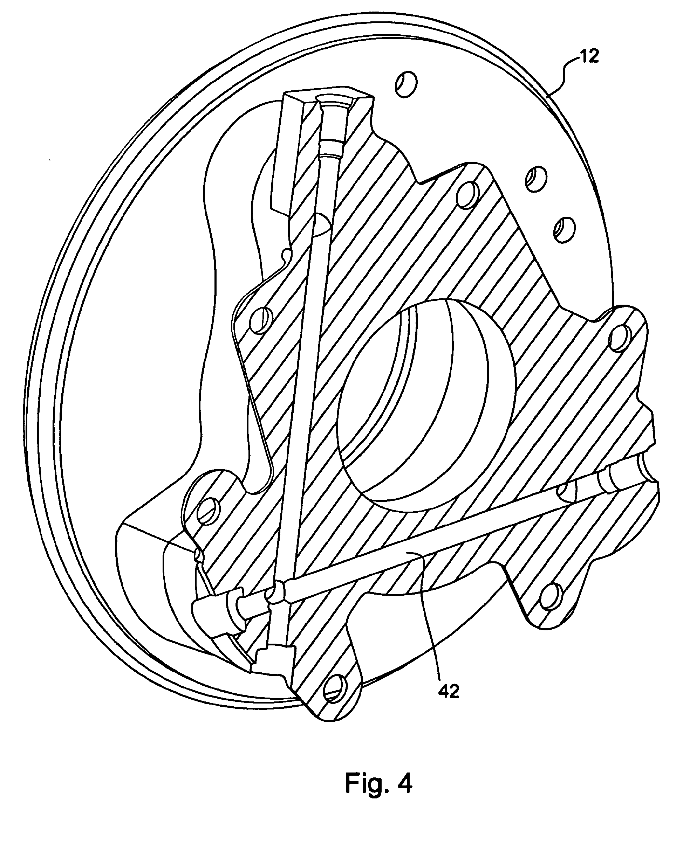

Referring now to Figs. 2, 3 and 4, the housing 12 forms a plurality (preferably three) piston bores 14 therein. The housing 12 receives a rotatable input shaft 16 which is supported by bearings 18 and 20 and coupled to a power source, such as an engine output shaft (not shown) through a gear 22 which is pressed on to the end of shaft 16.

A first or fixed sheave 24 is bolted to the outer end of shaft 16 so that sheave 24 rotates with the shaft 16 and fixed axially with respect to the shaft 16. A second or movable sheave 26 is mounted on shaft 16 inboard of sheave 24. Sheave 26 includes a hollow generally cylindrical hub 28. Hub 28 includes inner splines 30 which slidably mesh with outer splines 32 formed on the shaft 16. Due to the splines 30, 32, the sheave 26 rotates with the shaft 16 and is slidable axially with respect to the shaft 16 and the housing 12. Grease seals 29 and 31 are carried by the sheave 26 and slidably and sealingly engage the outer surface of the shaft 16. A drive belt 25 is held between sheaves 24 and 26.

Pistons 40 are axially movable in the piston bores 14 in response to fluid pressure communicated to piston chambers 41 via fluid passages 42 formed in the housing 12. An annular non-rotating shift collar carrier 44 engages the ends of the pistons 40, and includes recesses 43 which receive a reduced diameter end portion 45 of each piston 40.

A thrust bearing 46 has an outer race 48 fixed axially with respect to the carrier 44 and rotatable with the carrier 44, and an inner race 50 fixed axially with respect to the second sheave 26 and rotatable with the second sheave 26.

The carrier 44 includes an annular surface 52 which faces radially inwardly and which engages an outer surface 54 of the outer race 48 of the thrust bearing 46. An annular inwardly opening groove 56 is formed in the annular surface 52. An O-ring 58 is received in the groove 56. The O-ring engages the outer surface 54 of the outer race 48 to resist rotation of the outer race 48. Bearing 46 is fixed axially with respect to sheave 26 between shoulder 60 on hub 28 and a ring 62 which is received by groove 64 on the hub 28.

An annular flexible boot 70 has one end 72 fixed to the piston housing 12 and a second end 74 fixed to the carrier 44. The boot 70 prevents exposure of the piston to the environment.

When chambers 41 are pressurized, the pistons 40 move to the left, which forces the carrier 44, bearing 46, hub 28 and sheave 26 to the left, viewing Fig. 1. This causes the portion of belt 25 which engages sheaves 24 and 26 to be moved radially outwardly, thus effectively changing (increasing) the diameter of the belt drive formed by sheaves 24 and 26.

Oil may be supplied to the drive 10 via a single line (not shown) from a control block (not shown) at the rear of the engine (not shown). The control block is preferably connected to a pressure supply line (not shown) from a transaxle (not shown) and a return to sump line attached in addition to the line to the drive 10. A solenoid actuated control valve (not shown) may be used to control oil flow within the block (not shown). The housing 10 preferably has a single oil inlet and drilled passages 42 that supply oil to the piston chambers 41. The rotating sheave 26 slides along the rotating shaft 16 until the valve (not shown) stops the supply or return of oil, or the moving sheave 26 contacts the fixed sheave 24. The bearings 16, 18 and 46 may be independently greased and sealed. The housing 10 is preferably sealed to the engine (not shown) with a gasket (not shown).

Rotating seals 29 and 31 are not required to contain pressurized fluid. The hydraulic fluid used to pressurize the piston chambers 41 may be transaxle fluid which is cleaner than engine oil for increased seal reliability. The smaller pistons 40 are easier to manufacture and handle than one large piston. The O-ring seals 58 have a near zero leak rate. With multiple pistons 40, the drive 10 can still operate if a single piston seizes into the housing 12. The bearings 18, 20 and 46 require no service and are not dependent on engine oil for lubrication. The oil passages 42 within the housing 12 minimize leak points, simplify assembly, and offer better protection to the oil supply than external lines and fittings. The O-ring 58 in the carrier 44 keeps the outer race 48 of the bearing 46 from spinning without a press fit assembly and allows more consistent resistance to rotation of the bearing 46 over a large range of temperatures. The oil stays cooler because it does not circulate through the drive 10 constantly. The drive 10 can be controlled by a remotely mounted valve (not shown) to minimize the total length of hoses and tubing (not shown).

## Claims

1. A variable belt drive (10), comprising a non-rotating piston housing (12), the housing (12) forming at least one piston bore (14) therein; a rotatable input shaft (16) for coupling to a power source and supported by bearings (18, 20) in the piston housing (12); a first sheave (24) mounted for rotation with the shaft (16) and fixed axially with respect to the shaft (16); a second sheave (26) mounted for rotation with the shaft (16) and slidable axially with respect to the shaft (16); a piston (40) axially movable in the at least one piston bore (14) in response to fluid pressure; a non-rotating carrier (44) engaging an end of piston (40); and a thrust bearing (46) comprising an outer race (48) fixed with respect to the carrier and an inner race (50) fixed axially with respect to the second sheave (26) and rotatable with the second sheave (26) the carrier (44) including an annular surface which engages an outer surface (54) of the outer race (48) of the thrust bearing (46);
**characterized in that** an annular inwardly opening groove (56) is formed in the annular surface; and an O-ring is received in the groove (56), the O-ring engaging the outer surface (54) of the outer race (48) to resist rotation of the outer race (48) and by a flexible boot (70) having one end (72) fixed to the piston housing (12) and a second end (74) fixed to the carrier (44), the boot (70) preventing exposure of the piston (40) to the environment.

2. The belt drive according to claim 1, **characterized in that** the the housing (12) forms a plurality of spaced apart piston bores (14) therein; and the belt drive (10) includes a plurality of pistons (40), each piston (40) being axially movable in a corresponding one of the piston bores (14) in response to fluid pressure.

## Patentansprüche

1. Variabler Riemenantrieb (10) mit einem verdrehgesicherten Kolbengehäuse (12), wobei das Gehäuse (12) mindestens eine Kolbenbohrung (14) darin bildet, einer drehbaren Eingangswelle (16) zur Koppelung an eine Kraftquelle, wobei die Eingangswelle (16) durch Lager (18, 20) im Kolbengehäuse (12) gestützt ist, einer ersten Riemenscheibe (24), die zur Drehung mit der Welle (16) montiert und axial bezüglich der Welle (16) fixiert ist, einer zweiten Riemenscheibe (26), die zur Drehung mit der Welle (16) montiert und axial bezüglich der Welle (16) schiebbar ist, einem Kolben (40), der als Reaktion auf Fluiddruck axial in der mindestens einen Kolbenbohrung (14) beweglich ist, einem verdrehgesicherten Träger (44), der ein Ende des Kolbens (40) in Eingriff nimmt, und einem Drucklager (46) mit einer äußeren Lauffläche (48), die bezüglich des Trägers fixiert ist, und einer inneren Lauffläche (50), die axial bezüglich der zweiten Riemenscheibe (26) fixiert und mit der zweiten Riemenscheibe (26) drehbar ist, wobei der Träger (44) eine ringförmige Fläche aufweist, die eine äußere Fläche (54) der äußeren Lauffläche (48) des Drucklagers (46) in Eingriff nimmt, **dadurch gekennzeichnet, dass** eine ringförmige, sich nach innen öffnende Nut (56) in der ringförmigen Fläche ausgebildet ist und ein O-Ring in der Nut (56) aufgenommen ist, wobei der O-Ring die äußere Fläche (54) der äußeren Lauffläche (48) in Eingriff nimmt, um einer Drehung der äußeren Lauffläche (48) zu widerstehen, und durch eine flexible Manschette (70), deren eines Ende (72) am Kolbengehäuse (12) fixiert ist und deren zweites Ende (74) am Träger (44) fixiert ist, wobei die Manschette (70) verhindert, dass der Kolben (40) der Umgebung ausgesetzt ist.

2. Riemenantrieb nach Anspruch 1, **dadurch gekennzeichnet, dass** das Gehäuse (12) mehrere beabstandete Kolbenbohrungen (14) darin bildet und der Riemenantrieb (10) mehrere Kolben (40) aufweist, wobei jeder Kolben (40) als Reaktion auf Fluiddruck axial in einer entsprechenden der Kolbenbohrungen (14) beweglich ist.

## Revendications

1. Entraînement à courroie variable (10), comprenant un boîtier de piston non rotatif (12), le boîtier (12) formant au moins un alésage de piston (14) dans celui-ci ; un arbre d'entrée rotatif (16) destiné à être accouplé à une source de puissance et supporté par des paliers (18, 20) dans le boîtier de piston (12) ; une première poulie (24) montée à rotation avec l'arbre (16) et fixée axialement par rapport à l'arbre (16) ; une deuxième poulie (26) montée à rotation avec l'arbre (16) et pouvant coulisser axialement par rapport à l'arbre (16) ; un piston (40) déplaçable axialement dans l'au moins un alésage de piston (14) en réponse à une pression de fluide ; un support non rotatif (44) s'engageant avec une extrémité du piston (40) ; et un palier de poussée (46) comprenant un chemin de roulement extérieur (48) fixé par rapport au support et un chemin de roulement intérieur (50) fixé axialement par rapport à la deuxième poulie (26) et pouvant tourner avec la deuxième poulie (26), le support (44) comportant une surface annulaire qui s'engage avec une surface extérieure (54) du chemin de roulement extérieur (48) du palier de poussée (46) ;
**caractérisé en ce qu'**une gorge (56) annulaire s'ouvrant vers l'intérieur est formée dans la surface annulaire ; et un joint torique est reçu dans la gorge (56), le joint torique s'engageant avec la surface extérieure (54) du chemin de roulement extérieur (48) de manière à résister à la rotation du chemin de roulement extérieur (48) et par un manchon flexible (70) ayant une extrémité (72) fixée au boîtier de piston (12) et une deuxième extrémité (74) fixée au support (44), le manchon (70) empêchant l'exposition du piston (40) à l'environnement.

2. Entraînement à courroie selon la revendication 1, **caractérisé en ce que** le boîtier (12) forme une pluralité d'alésages de piston (14) espacés dans celui-ci ; et l'entraînement à courroie (10) comporte une pluralité de pistons (40), chaque piston (40) étant déplaçable axialement dans l'un correspondant des alésages de piston (14) en réponse à la pression d'un fluide.
